# EUROPEAN PATENT SPECIFICATION

(11) **EP 3 010 194 B1**
(45) Date of publication and mention of the grant of the patent: **03.04.2019**
(21) Application number: 14193793.8
(22) Date of filing: 19.11.2014
(51) Int. Cl.: H04L 29/06

(54) **Method of tracing a transaction in a network**
Verfahren zur Verfolgung einer Transaktion in einem Netzwerk
Procédé de traçage d'une transaction dans un réseau

(30) Priority: 13.10.2014 US 201414512894
(43) Date of publication of application: 20.04.2016
(73) Proprietor: ScienceLogic, Inc., Reston VA 20191 (US)
(72) Inventor: Rochette, Donn, Fenton, IA 50539 (US)
(74) Representative: HGF Limited

(56) References cited:
- WO-A1-2012/106573
- US-A1- 2010 306 384
- US-A1- 2014 297 846

## Description

### TECHNICAL FIELD

The present invention relates generally to networking and communications technology and, more particularly, to methods of tracing transactions within a network.

### BACKGROUND

Processing information and providing services over a network often includes the use of a networking mechanism called transaction processing. A network transaction is a group of operations that are combined to service a specific request, and servicing a request typically requires interaction from several application components, often in communication over a network.

The complexity of a distributed computing architecture, such as disclosed in U.S. Patent Publication No. 20100306384, makes it difficult to diagnose system failures and analyze system performance. In addition to monitoring the traffic volume on a network, possible bottlenecks and failures, it is necessary to monitor transactions, which may be affected by factors other than the network traffic, and may fail even if there are no problems with traffic on the network. Furthermore, debugging of a particular application may be insufficient for determining transaction issues related e.g. to competition for resources such as database access.

Accordingly, monitoring or tracking a transaction presents a problem different from traffic monitoring or debugging of applications. A variety of tools have been developed for transaction tracing so as to enable the following of a single request through a system.

One approach includes modifying packets and thus tagging individual transactions as it is done in U.S. Patent No. 7,051,339 and U.S. Patent No. 6,714,976. WO 2012/106573 teaches marking a transaction by inserting markers into the data stream. Alternatively, requests and optionally other messages of a transaction are captured and sent to a storage and/or transaction monitoring application which parses the message and extracts available data, such as disclosed in U.S. Patent Publication No. 20120278482 and U.S. Patent Publication No. 20110035493. There is a need to mitigate disadvantages of existing methods and to provide a novel method for tracking transactions in a communication network.

### SUMMARY

The invention is disclosed by the independent claims. Particular embodiments are described by the dependent claims.

### BRIEF DESCRIPTION OF THE DRAWINGS

In order to facilitate a fuller understanding of the exemplary embodiments, reference is now made to the appended drawings, in which like elements are referenced with like numerals. These drawings should not be construed as limiting the present disclosure, but are intended to be illustrative only.
Figure 1 is a schematic diagram of a transaction;
Figure 2 is a schematic diagram of a network topology where a transaction may be traced;
Figure 3 is a schematic diagram of a network topology where a transaction may be traced;
Figure 4 is a schematic diagram of a transaction;
Figure 5 is a flow chart of the tracing method;
Figure 6 is a schematic diagram of a transaction;
Figure 7 is a schematic diagram of the tracing method;
Figure 8 is a flow chart of the tracing method;
Figure 9 is a diagram illustrating a case study of a network service, showing that the aggregate of all information collected from every network operation represents a complete description of a network service;
Figure 10 is a schematic process view of an application stack illustrating application interfaces exported in the form of shared libraries, or dynamic linked libraries (DLLs) wherein system call mechanisms are employed;
Figure 11 is diagram of a conceptual view of an extraction method for extracting information from an executing software application wherein executable code, in the form of software instructions, is placed in the address space of one or more processes;
Figure 12 illustrates an application stack having two processes running wherein process B has an AppAware library inserted into Process B for gathering information about the software application that is executing;
Figure 13 shows the application stack illustrating the software code embodied in the AppAware library placing information extracted from individual processes into shared memory and illustrating a collector which makes the extracted information available to a separate data analysis operation intended for user presentation; and
Figure 14 is a diagram of a system for processing data that has been collected, storing it and accessing the data through web interfaces.

### DETAILED DESCRIPTION

In a general sense a transaction is a communicative action or activity between two or more parties or things that reciprocally affect or influence each other. In a communication network, a transaction is a group of operations that together service a specific request.

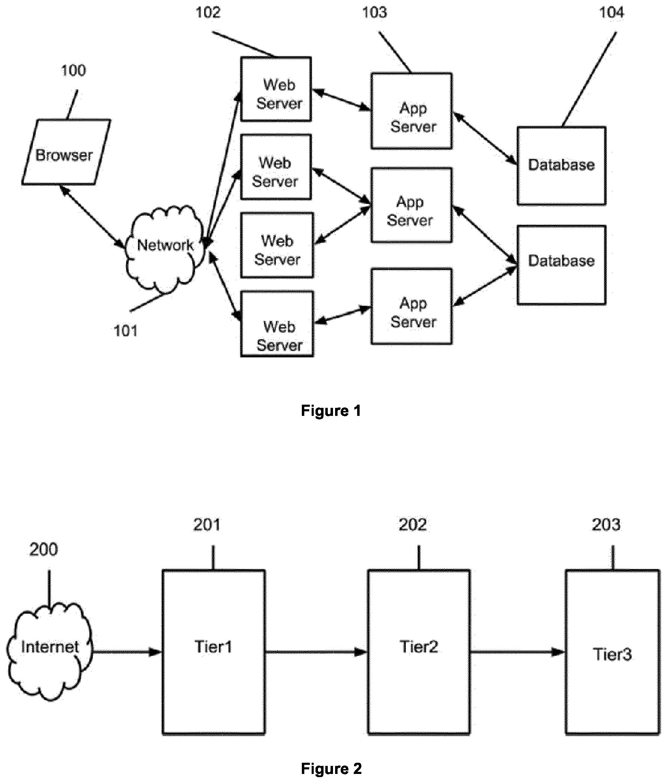

In an example illustrated in Figure 1, requesting a URL from a browser 100 causes a number of requests made to multiple web servers, application servers, and databases in order to return a web page. The set of requests and responses together may define a transaction. When a URL www.mypage.com is entered into a browser application 100, a request is sent over a network 101 to a web server 102 at, by way of illustration, the IP address 10.9.8.7 using the port number 80. In turn the web server 102 at 10.9.8.7 initiates a client connection to an application server 103 in order to obtain data to service the request. An application server 103 obtains information from a database 104. When the data has been gathered via requests from the database 104 and processed by the application server 103, the originating request is fulfilled and the browser 100 displays the information obtained. A transaction includes a collection of requests and responses between the browser 100, the web server 102 at 10.9.8.7 and one or more application servers 103 and one or more databases 104.

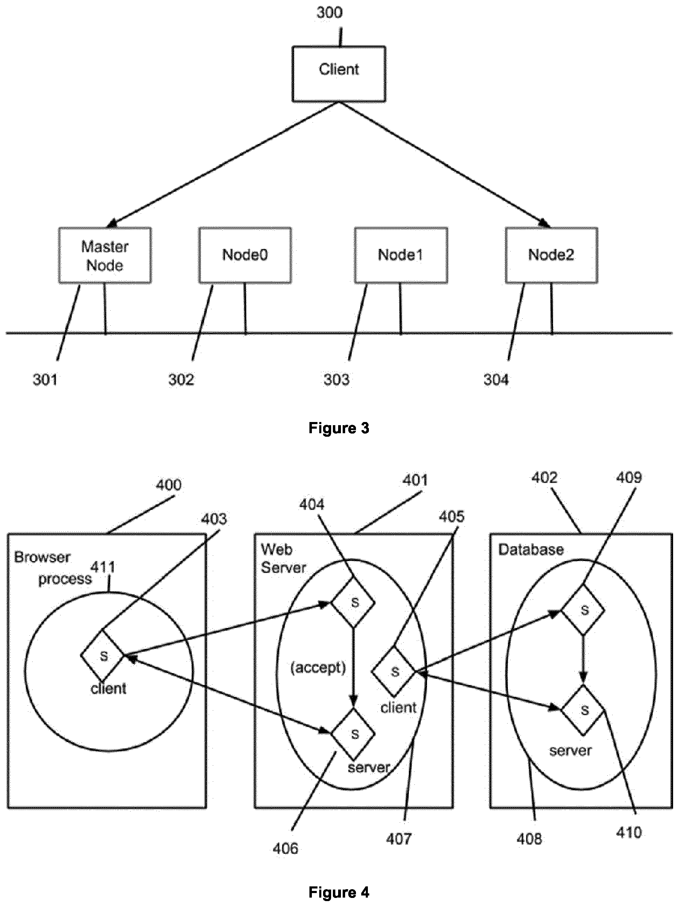

There are potentially many thousands of transactions that go through a single network node, such as the server 102. The method described herein enables isolation and tracing of any individual transaction in any network topology, such as a multi-tier architecture illustrated in Figure 2 or a cluster architecture commonly used in distributed computing designs, shown in Figure 3.

A transaction may be traced by using data related to sockets. In an example illustrated in Figure 4, a transaction may include the following steps:

From a desktop computer 400 a browser process 411 creates a communication endpoint through a socket 403. The browser process 411 binds the socket 403 to the IP address for a web server 401 using a port number that establishes a connection to a web server process 407. The web server process 407 is waiting for connections (listening) on a socket 404. When a connection is made by the browser 411, a second socket 406 is created by the web server 407. A request from the browser 411 is sent to the web server process 407 using the socket connection between the sockets 403 and 406. If the web server process 407 is able to respond to the request without further connections, it will send a reply to the browser process 411 using the socket connection defined by the sockets 403 and 406. If the web server process 407 requires additional information to respond to the request, the server 407 will create a client connection to another server to retrieve any additional information needed. The client connection is made in the same manner as the browser process 411 client connection is made, this time from the web server 401. A client socket 405 is created by the web server process 407. Depending on the design of the specific software another process on the web server 401 could create a client socket connection. As shown in Figure 4 the client socket 405 is bound to the IP address for database server 402. The port number used by client socket 405 establishes connection with the database process 408 that is listening for connections on socket 409. When a connection is established, a second socket 410 is created e.g. by means of the accept() system call. The database process 408 retrieves specific data as defined by the request received from the web server process 407 over the connection defined by sockets 405 and 410. The data is returned by the database process 408 to the web server process 407 using the connection defined by sockets 405 and 410. The web server process 407 processes the data received from the database server process 408 and responds to the originating request from the browser process 411 using the connection established by sockets 403 and 406. The response from web server process 407 to browser process 411 completes the transaction.

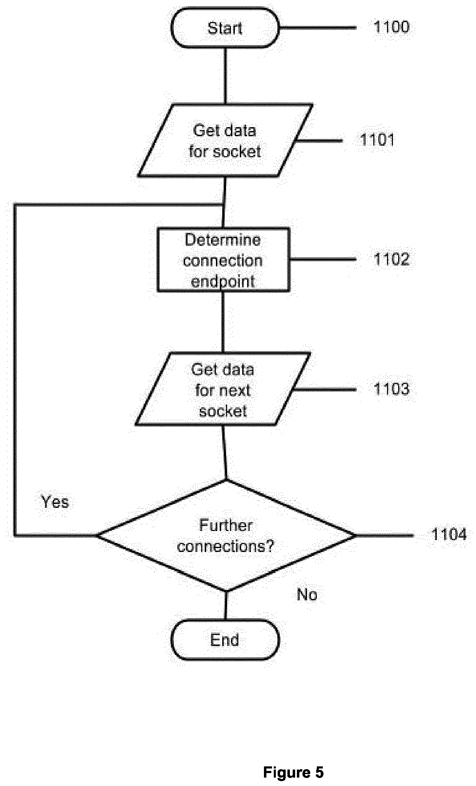

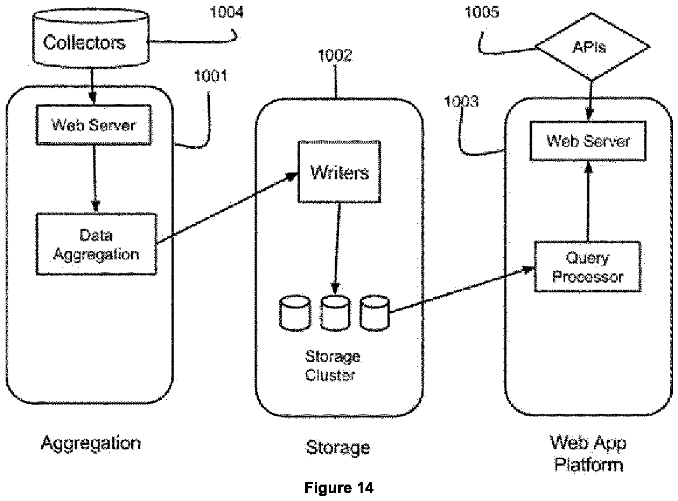

Given a starting point 1100, the detailed message flow associated with a transaction can be mapped, allowing the transaction details to be traced. Figure 5 illustrates tracing a transaction e.g. starting with a server at the edge of a network where socket data is available for using the transaction tracking method disclosed herein. This would be the case when a remote browser connects to a web server as in Figure 4. A specific socket connection can be used as a starting point 1100. Socket data for the server may be retrieved by means of APIs 1005 as discussed further herein with reference to Figure 14. Alternatively, a specific transaction may be identified at the starting step 1100 by selecting a specific URL. It is common for URLs to be emitted in log messages, resident in a file on the local operating system. In this case, by using the URL-related data stored in memory on or used by a base node where the tracking process starts from, a time tag associated with the URL may be used to locate the associated socket on the base node. In either case, the selection of a socket may serve as a starting point 1100 for tracing a transaction.

In a socket retrieving data step 1101, socket data for the socket identified in the starting step 1100 may be retrieved using APIs 1005 as discussed below. This provides details of the process that is handling requests, the server process 407. Socket details for the server process 407 may be retrieved using APIs 1005. With reference to Figure 4, there will be data for three sockets 404, 405, 406. By examining connection details for each socket, it may be determined that the server process 407 received a request through the sockets 404 and 406.

The endpoint-connection step 1102 is to determine if any further connections, possibly associated with the transaction, have been established from the server 401 to other nodes. Further connections would be accomplished by means of client sockets created on the server 401. The choice of potential connections can be refined by using a time window defined by the transaction response time. Any socket connection established, in this example, on the server 401 within the response time window represents a potential subsequent connection. For the transaction illustrated in Figure 4, the socket data for the process 407 shows establishing or using a client socket 405. The data for socket 405 is used to determine the endpoint for the connection, i.e. the remote IP address, which is of the database server 402 in the example illustrated in Figure 4.

The next-node step 1103 results in obtaining data for a paired socket created by a process executed on a next node. The remote IP address used by the socket 405 identifies the node 402 and may be retrieved, together with the remote port number, from the stored socket data related to the server process 404 e.g. by using APIs 1005. The remote IP address and port number data for socket 405 is compared to the socket data from processes on the database server 402. The comparison of the remote port number for socket 405 may reveal that the process 408 listens on the socket 409 and uses the socket 410 to connect to the socket 405 on the server 401.

The further connection step 1104 includes examining of socket data in order to determine if further connections to other nodes have been established. If so, the tracking method repeats steps 1102 through 1104. If there are no connections to other nodes, associated with the transaction being traced e.g. used within a predefined time interval, the tracking process may stop. With reference to Figure 4, the socket data related to the database node 402 reveals that no further connections to nodes other than the web server 401 have been established within a predefined time interval. Therefore, the database 402 is the endpoint in the processing of messages; thus, the transaction detail has been mapped. Optionally, the transaction may be traced in both directions, accounting for requests and responses. Relative to Figure 4, a transaction may be traced from the web server 401 to the database 402 and back to the web server 401.

Advantageously, identification and tracking of a transaction can be initiated at any network node participating in the transaction. With reference to Figures 2 and 3, mapping of a transaction could start from a client connection 300 as well as at a node in a cluster 301, 302, 303 or 304. Likewise transactions can be mapped from any tier in the N-tier architecture 201, 202, or 203.

The method disclosed herein also allows for a transaction to be tracked (traced) in any or both directions, forward and in reverse direction, relative to the transaction timeline, from the point where tracing has been initiated. With reference to Figure 4, the socket 410 which sends information from the database 408 may be identified as a starting point of tracking a transaction in the start step 1100 in Figure 5. Then the socket 409 through which a request for the information has been received at the database node, may be identified, possibly by the two calls being within a time interval related to the database performance and/or by the fact that the request at the socket 409 has been received from the same IP address of the node 401 as the address where the response has been sent through the socket 410.

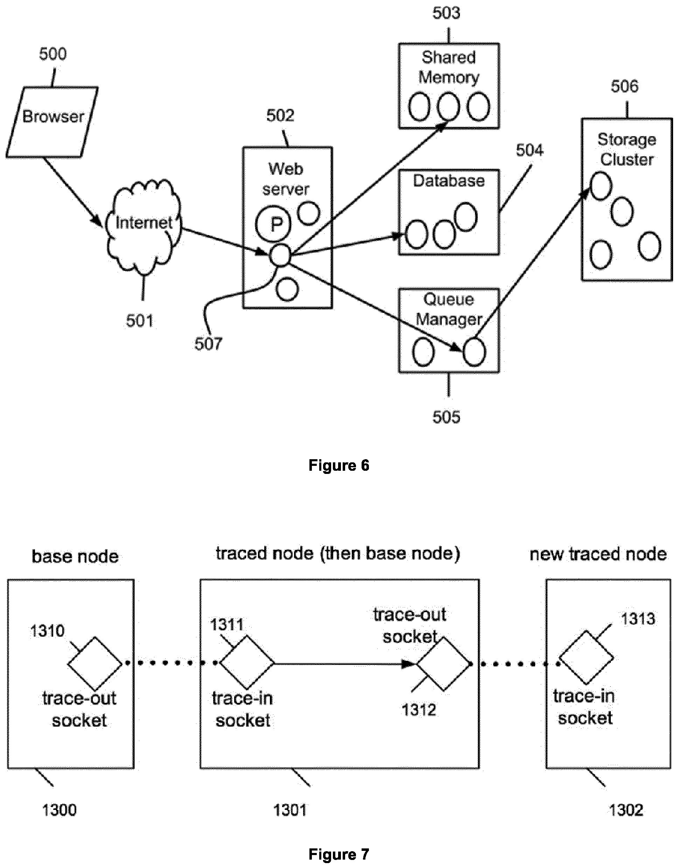

It is common for a transaction to branch when a server process makes several connections to one or more nodes in order to respond to a request. With reference to Figure 6, a browser process on a desktop computer 500 makes a request using, by way of example, the internet 501 to a web server 502. The process 507 on the web server 502 is listening for connections and a socket connection between the web browser on the node 500 and the web server 502 is established. The web server 502 in this example makes three client connections to a shared memory server 503, a database 504 and a queue manager 505. The connections to the shared memory server 503 and the database server 504 do not require additional connections to other nodes, and the two strings of connections (two branches of the transaction) terminate at the shared memory server 503 and the database 504. The queue manager 505 sends additional client requests in order to access data from a storage cluster 506. The string of connections may further branch within the storage cluster 506. When information is returned to the web server 502 from all required sources 503, 504, 505 and subsequently 506, the web server process on 502 fulfills the request made by the browser on desktop computer 500.

Figure 7 illustrates the use of sockets within the method disclosed herein for tracking a transaction. Identifying and tracing a transaction starts at a base node 1300 and a trace-out socket 1310 that may be determined in any way, for example, as discussed above. By analyzing where data is sent to from the trace-out socket 1310, or where data is received from at the trace-out socket 1310, the traced node 1301 and the trace-in socket 1311 may be determined. By way of example, the sockets 1310 and 1311 may exchange TCP or UPD messages. Then, the transaction may be traced within the traced node 1301 e.g. by identifying two socket operations on the traced node within a predefined node time interval, wherein one of the two socket operations relates to the trace-in socket on the traced node, and another of the two socket operations relates to the trace-out socket on the traced node. Tracing the transaction within the traced node 1301 may involve identifying a process on the traced node, wherein the process performs two socket operations, one of the two socket operations related to the trace-in socket on the traced node, and another of the two socket operations related to the trace-out socket on the traced node.

After the trace-out socket 1312 is determined on the node 1301, the tracing process repeats so that, in the next cycle of the method, the node 1301 is treated as another base node and the trace-out socket 1312 is used for identifying a next traced node 1302 and a next trace-in socket 1313.

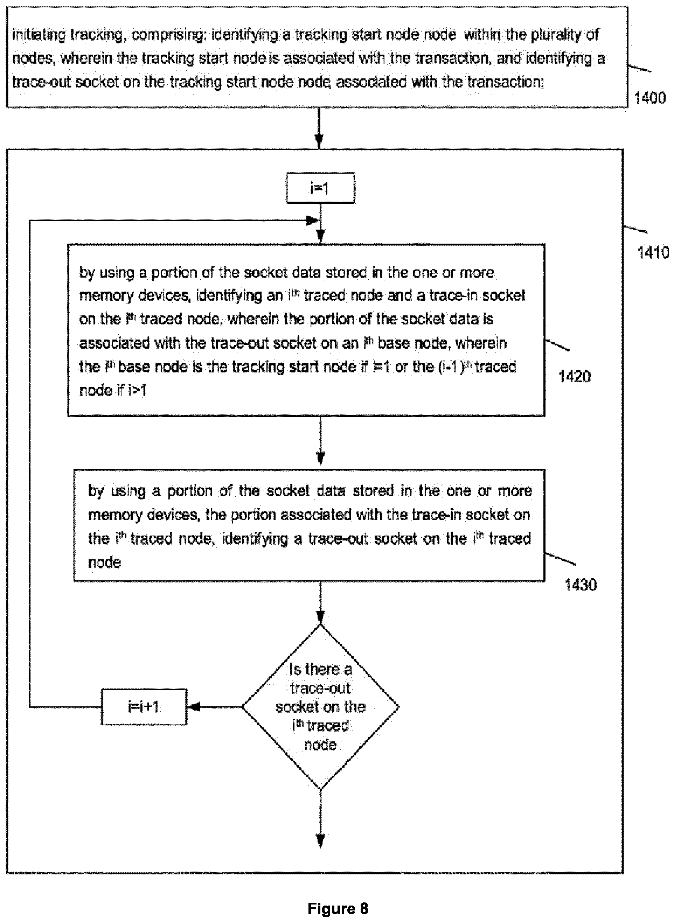

The method of tracking a transaction communicated through at least two nodes each controlled by one or more processors, and in communication through sockets with one another along a transaction path, includes the following steps illustrated in the flow chart in Figure 8.

An initiating step 1400 includes identifying a tracking start node which is a first base node within the plurality of nodes, wherein the base node is associated with the transaction, and is one of the transaction nodes. The initiating step 1400 also includes identifying one or more trace-out sockets on the base node, associated with the transaction. Relative to the example discussed with reference to Figure 4, the web server node 401 may be the first base node and the socket 405 may be the trace-out socket. With reference to Figure 7, the initiating step 1400 includes identifying the base node 1300 and the trace-out socket 1310.

It is possible that the transaction branches at the base node. Accordingly, if more than one trace-out sockets are identified on the base node, the following tracing step, a transaction path step 1410 which identifies one or more transaction nodes, may be performed for each of the trace-out sockets identified in the initiating step 1400, i.e. for each branch of the transaction path. The transaction path step 1410 includes identifying one or more transaction nodes, each connected to the base node identified in the initiating step 1400 or to another of the transaction nodes identified in a previous repetition of the transaction path step 1410. Each transaction node may include one or more processors which, in operation, execute at least one process that processes the transaction, i.e. receives and/or sends messages which form the transaction. The transaction nodes, including the base node identified in step 1400, together form the transaction path and communicate through IP sockets with one another along the transaction path.

The transaction path step 1410 includes a trace-in step 1420 and a trace-out step 1430. The two steps are repeated several times (*N*>1) until the trace-out step discovers no further trace-out sockets. The order of the repetitions may be identified by an index *i* which changes from 1 to *N* and is not meant to be included in an implementation of the method. The trace-in step 1420 includes identifying an *i*^{th} traced node and a trace-in socket on the *i*^{th} traced node by using the socket data stored in memory, in particularly using a portion of the socket data associated with the trace-out socket on the *i*^{th} base node. The trace-in socket on the *i*^{th} traced node and the trace-out socket on the *i*^{th} base node form a socket pair, i.e. one socket receives a message written to another socket. If the trace-out socket on the *i*^{th} base node is an IP socket, the IP address from the socket data associated with the trace-out socket is used to identify the *i*^{th} traced node whereby identifying one of the transaction nodes. Thus, the method allows for tracing a transaction through at least two nodes with different IP addresses and connected through routing means such as a switch, or router, or the like.

With reference to Figure 7, the trace-in step 1420 includes identifying the traced node 1301 and the trace-in socket 1311. Relative to Figure 4, the trace-in step 1420 includes identifying the database node 402 and the trace-in socket 409. The trace-in step 1420 may be executed for each of the trace-out sockets on the base node and may result in identifying more than one traced node. The base node and traced node, each is controlled by one or more processors and, in operation, execute one or more processes which process the transaction, i.e. send and/or receive messages which form the transaction; the messages are sent and received through the trace-in and trace-out sockets. The processors have access to one or more memory devices, at least for storing socket data in memory.

The transaction path step 1410 also includes the trace-out step 1430, which follows the trace-in step 1420. The trace-out step 1430 may be performed for each of the traced nodes and the trace-in sockets identified in the trace-in step 1420, and includes identifying one or more trace-out sockets on the *i*^{th} traced node by using the socket data stored in memory, in particularly using a portion of the socket data associated with the trace-in socket on the *i*^{th} traced node. The portions of socket data are greater than zero and up to 100% of the data; each portion may be associated with a socket e.g. by including information on operations related to the socket or information related to the paired socket. The trace-out step 1430 may include identifying two socket operations on the *i*^{th} traced node within a predefined node time interval, wherein one of the two socket operations relates to the trace-in socket on the *i*^{th} traced node, and another of the two socket operations relates to the trace-out socket on the *i*^{th} traced node; when two socket operations are separated by time greater than the predefined node interval, the operations are assumed to relate to separate transactions, or at least to different branches of a transaction. The trace-out step 1430 may also include identifying a process on the *i*^{th} traced node, wherein the process performs two socket operations, one of the two socket operations related to the trace-in socket on the *i*^{th} traced node, and another of the two socket operations related to the trace-out socket on the *i*^{th} traced node. The identified process, and preferably all processes so identified, may be reported as associated with the transaction.

With reference to Figure 7, the trace-out step 1430 includes identifying the trace-out socket 1312 on the traced node 1301. Relative to Figure 4, the database server 402 (the traced node) makes no further connections to nodes other than the web server 401. Depending on the implementation of the method, the tracking process may stop or continue back to the web server 401. In the latter case, the socket 410 is the trace-out socket identified during the trace-out step 1430.

In case the trace-out step 1430 successfully identifies a trace-out socket on the *i*^{th} traced node, the method steps 1420 and 1430 are repeated, wherein the *i*^{th} traced node becomes, or referred to as a base node at a next execution of the trace-in step 1420 (along a single branch of a transaction). In other words, the *i*^{th} base node is either the tracking start node identified in the initiating step 1400 (for *i*=1) or the (*i*-1)^{th} traced node if *i*>1.

With reference to Figure 7, the node 1301, previously identified as a traced node, is used as a new base node in order to define a new traced node 1302 by repeating the trace-in step 1420. With reference to Figure 6, the queue manager node 505 may be identified as a traced node in the trace-in step 1420, wherein the web server 502 is treated as a base node. When the trace-in step 1420 is repeated , the queue manager node 505 is used as a base node for identifying a cluster storage node 506 as a traced node.

The method of tracking a transaction includes repetitive execution of the trace-in step 1420, wherein in each repetition a traced node is defined by information related to a base node, and each following repetition uses the traced node identified in the previous repetition of step 1420 as a base node for identifying a new traced node. The first repetition of step 1420 uses the first base node identified in the tracing initiating step 1400 in order to identify a first traced node. In the second repetition of step 1420, a second base node is the first traced node, and it is used for identifying a second traced node. Further on, in each execution of trace-in step 1420 (with the exception of the first execution discussed above), the new base node is the traced node identified in the previous execution of the trace-in step 1420. It should be noted that the number of a traced or base node (first, etc.) reflects the order of its examination by the method, and not the place in the transaction path or timeline.

Notably, a traced transaction may be part of another transaction. With reference to Figure 1, a transaction which starts with the request from the web server 102 to the application server 103, proceeds to the database 104 and back, is part of the transaction originated at the browser 100 as discussed above. The tracking process may be initiated (step 1400) at any point along the transaction path, and a transaction may be tracked (traced) in any or both directions, forward and in reverse order, relative to the transaction timeline, from the point where tracing has been initiated, as discussed above relative to the examples illustrated in Figures 2 through 4.

The method disclosed herein with reference to Figure 8 may be executed in a network which includes a plurality of nodes, each including one or more processors, understood herein as hardware processors, e.g. general purpose microprocessors or specialized processors. Nodes may include, but are not limited to, general purpose computers, specialized devices, mobile telephones, pocket computers, personal computers, servers, multiprocessor systems, microprocessor-based systems, minicomputers, mainframe computers, and distributed computing environments. Nodes in the network may be in communication through one or more routing devices. A routing device may be a network switch connecting nodes in a local area network, or a router connecting local networks, or may be as simple as two nodes connected with a single connection. The processes that process a transaction are executed by processors on nodes which are in communication through sockets. Processes executed on the nodes may use Internet Protocol (IP) sockets which allow communication between two processes executed on two nodes with different IP addresses, or inter-process communication (IPC) sockets which use, for example, shared memory or the local file system to enable communication. The sockets may be TCP or UDP sockets. Socket data associated with the sockets may be collected and stored in memory as described further below. In a preferred embodiment, the method includes tracing a transaction over a network, i.e. a transaction communicated through two or more nodes with different IP addresses, which includes using a remote IP address associated with the trace-out socket (step 1420) so as to identify a traced node which has an IP address different from the IP address of the base node and accessing socket data stored on, or exported from, both the nodes. The plurality of nodes in the system include transaction nodes within a path of a particular transaction traced by the method.

The step of identifying a traced node (step 1420) based on the data available for the base node may not necessarily result in discovery of a new node in the transaction path. In case the trace-out socket on the base node is an IPC socket, the socket may provide communication between two processes executed on a same node. However, besides identifying the traced node, which turned out to be the same base node in this example, the trace-in step 1420 includes identifying a trace-in socket. In the trace-out step 1430, by using the data associated with the trace-in socket, another trace-out socket may be identified on the base/traced node, e.g. by the fact that the newly found trace-out socket and the trace-in socket have been accessed by a same process within a short predefined time interval. In one embodiment, of the method, two processors within a multi-processor computer system may be treated as two different nodes each controlled by a processor, if the nodes communicate through sockets.

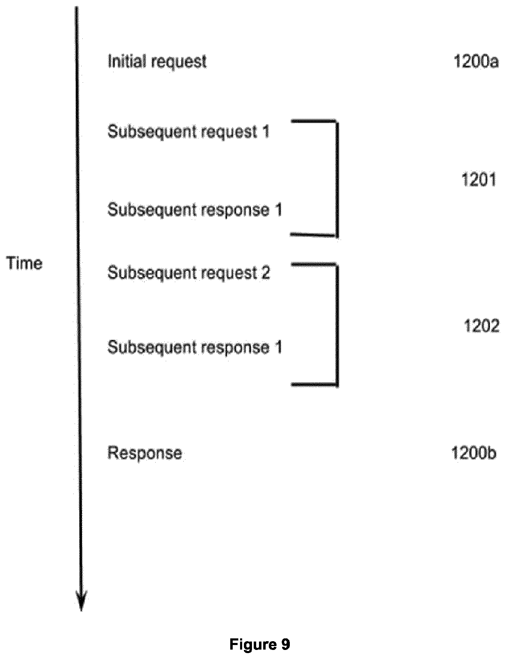

The time required to complete a transaction may be used to refine the search to discover any subsequent connections. With reference to Figure 4, the transaction time is the time from when an initial request is received by a server 401 using a server socket 404 to the time when a response is returned to the client that initiated the request. This time includes all subsequent requests. Referring to Figure 4 the response time starts when the client browser process 411 sends a request to the server socket 404 on server 401. In this example, the transaction is complete when a response is returned on socket 406 from server 401 to the client browser using socket 403. The subsequent connection from process 407 to process 408 on socket 410 is included in the response time due to the fact that this connection is used to gather information before a response can be returned to the browser process 411. In this manner the response time is a summation of all subsequent connections accounting only for one (the longest) branch when the transaction path branches as discussed above with reference to Figure 6. With reference to Figure 9, the transaction time is the time from initial request 1200a to response 1200b. The transaction time is the sum of subsequent request 1201 and a second subsequent request 1202.

The method traces a transaction from socket to socket, accounting for socket operations on a particular node or performed by a particular process. The socket operations have to be within the transaction time interval which is unlikely to be known, but can be estimated. In the trace-out step 1430, a trace out socket is defined based on the data available for the trace-in socket on the same node; the 1430 step may include using a predefined time interval so that socket operations which involve the two sockets would happen relatively close to one another, i.e. within the predefined time interval. The time interval may be specific to each node. The node time interval may be identified from the socket data collected at that node, or may be preconfigured and possibly adjusted if too many socket operations happen within the interval; by way of example, the interval may be shortened if more than a predefined number of socket operations happen within an interval. Predefined time intervals may also be used in other steps of the method. In the initiating step 1400, a socket operation involving a trace-out socket should happen relatively soon after the traced URL was logged, or the initial tracing point was somehow identified.

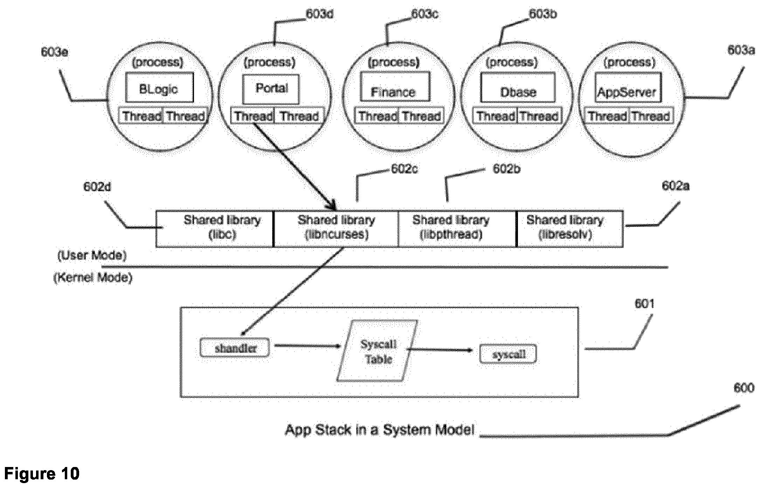

The transaction tracking method disclosed herein relies on data related to sockets and socket operations. The data may be stored in memory and used for tracing a transaction. A system and method described further with reference to Figures 10 through 14 may be used for collecting, aggregating and accessing detailed data collected from within the one or more processes, including their use of sockets. Advantageously, the method disclosed herein does not modify the transaction.

In operation, a software application deployed on any modern operating system (OS) executes as one or more processes, by way of example, processes 603a through 603e illustrated in Figure 10. The OS causes the software application to execute by creating one or more processes. Processes that are able to execute, for example, those that are not blocked waiting for resources, are placed in a run queue. The OS causes processes in the run queue to execute on an available CPU resource. Each process consumes compute resources in the form of, at least, memory, CPU cycles and one or more threads. Resource usage can also include files, network, interprocess communication and/or synchronization mechanisms.

Access by a software application to system resources is provided through shared libraries or DLLs, e.g. libraries 602a through 602d in Figure 10. When a software application is started, the program loader provided with the OS reads the associated executable file and determines which shared libraries or DLLs are referenced by the executable. The requisite libraries are loaded into memory along with the application executable files. The loader performs dynamic linking between the application executable file or files and functions exported by the libraries.

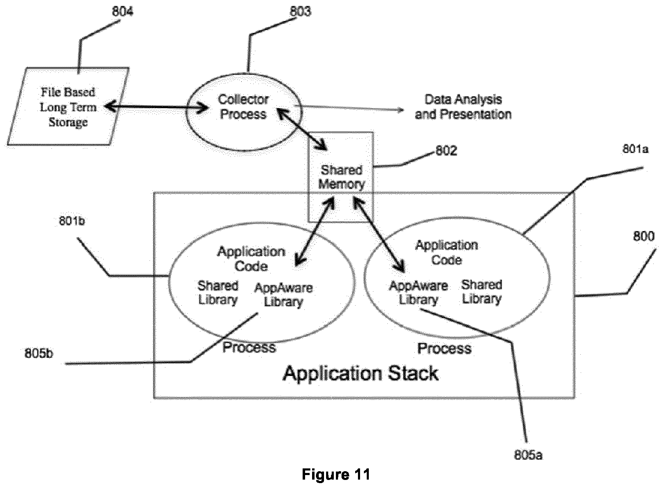

Turning now to Figure 11, a conceptual view of the extraction method is shown. An application stack 800 is shown having two processes 801a and 801b each consisting of executable application code in the form of software instructions specific to that process 801a and 801b respectively, and shared libraries. Executable code, in the additional library 805a and 805b in the form of software instructions, is placed in the address space of one or more processes. These software instructions are embodied in a shared library or dynamic linked library. This library file 805a and 805b is loaded along with other required system library files. This library 805a and 805b becomes an additional library referred to hereafter as a software application-characterizing library (SACL), which is loaded into in the virtual address space of any given process. The software instructions embodied in the SACL are used to extract information in real-time from a running process. The SACL is an additional library in addition to library files normally required to execute the software application and this additional library 805a and 805b gathers information about the software application including one or more processes 801a and 801b that are running in a nearly real-time manner. What is meant by real-time in this instance is aperiodic execution and during execution of the software application from which information is being gathered rather than polling the software application by way of interrupting execution with an interrupt such as hardware interrupts. As is well known, the use of an interrupt requires switching from user mode to Kernel Mode. Preferably, the same SACL 805a and 805b is used for all processes on a node, although it would be possible to vary the particular behavior of the SACL if required by modifying the instructions within the SACL.

The program loader is configured to load not only the libraries required by the software application executable, but also an additional library (SACL). The additional library is used to extract information as an application executes. The SACL is described as an application aware (AppAware) library. OS interfaces to cause the loader to load an additional library are available in most modern OSs.

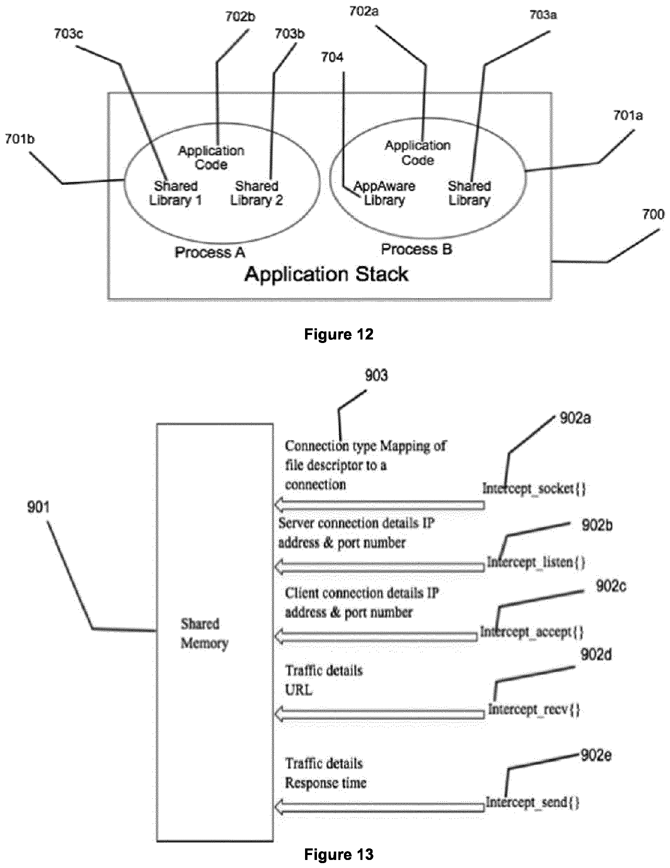

During library initialization the code exported from the SACL is placed in the execution path between the application and a subset of the functions exported by system libraries. Figure 12 illustrates an application stack 700 having two processes running, each process having application specific code 702a and 702b, wherein process B has an AppAware library inserted into Process B for gathering information about the software application that is executing. An AppAware library 704 is loaded into the process address space of process 701a. There are several approaches that can be taken to place code in the execution path of an application. This can be described as an intercept; by way of example if function A in a process calls function B in a shared library, an intercept causes the process to call function C in the AppAware shared library 704 which extracts information related to the software application executing and then calls function B in a shared library 703a as originally intended. An intercept can be accomplished by means of dynamic linking or patching software instructions. The result is to have the application call the function exported by the AppAware library 704 instead of the corresponding function in the system library 703a.

Figure 12 illustrates the concept. Application code 702b calls functions exported by system libraries 703b, in a routine manner. When application code 702a calls the same system function it is actually calling the function in the AppAware library 704. Preferably, the AppAware function in turn calls the corresponding function from a system library or DLL 703a. The use of the program loader and the AppAware software enables this change in the location of a function, from a system library 703a to the AppAware library 704 thereby allowing desired intercept software to query the application in situ and during execution.

The act of placing software instructions in the address space of each process that constitutes an application stack enables information to be extracted from each process associated with the software application that executes; it is a first step required to acquire information related to an executing software application. The SACL is loaded once for each process. Information is gathered on the fly. There is no prior knowledge of the application required. Advantageously, the behavior of the application stack from which information is extracted does not change in such a manner that individual processes associated with the application stack do not block where they would not otherwise block. The act of extracting information does not in any significant manner consume resources that would affect any process associated with the application stack. This includes CPU cycles, memory, and I/O. The extraction code embodied in a shared library or DLL does consume CPU cycles and memory. However, it should not consume I/O resources. The CPU and memory consumed is small enough in both cases so as to not significantly affect the software application from which information is being extracted other than having a very short delay in the execution of the software application or a particular process from which information is extracted.

The collection system may place all information extracted from individual processes in a shared memory segment 802 on the node, and also may store the collected data, including data associated with sockets created and accessed by one or more processes executed on the node, in a one or more memory devices in a storage 804.

Once the instructions exported from the SACL are placed in the execution path it is able to extract information from functions that are called by the executing software application. Figure 13 offers an example in the form of a case study of a network service. This represents a set of socket operations performed 902a through 902e by a server in a client server model. SACL code, shown in Figure 11, as intercept functions 902a through 902e extracts details from parameters passed to socket functions from application code as well as values returned from socket functions to application code. Figure 13 illustrates the information extracted from each socket function. It can be seen that a very complete description of a network service can be extracted by culling information from various socket functions.

Referring more specifically to Figure 13, the ability to obtain information from numerous, potentially disparate, operations enables a very concise and accurate description of application operation. Figure 13 provides an example of a network service, wherein such a service is the server component of a client-server network model. It can be seen that the aggregate of information 903 gathered from the network operations 902a through 902e performed by a service and stored in memory 901 (i.e. the shared memory 802, Fig. 12) describes in concise detail the operation of such a service. The aggregate information 903 may include the following details for each and every network connection:
a. Server Internet Protocol (IP) address,
b. Server port number,
c. Client IP address,
d. Client port number,
e. Protocol used (e.g. TCP or UDP),
f. Connection type (e.g. AF_INET or AF_LOCAL),
g. Network traffic described as number of bytes received,
h. Network traffic described as number of bytes transmitted,
i. Network response time, and
j. Protocol specific values (e.g. URL from an HTTP connection).

In another example, SACL intercepts a connect() system call which connects a socket, identified by its file descriptor. The function call specifies the address of a remote host, which is now in stored data. In other words, each intercept relates to a particular process, to which a SACL is linked; thus the intercepts may be stored in groups related to a particular process, and when multiple processes are traced, each intercept may be associated with the related process. A portion of socket data stored in the memory of each node, or in one or more memory devices of the tracking system, is associated with the process that issued a function call. US patent No. 8,707,274 incorporated herein by reference provides more detail related to collecting socket data.

Figure 14 illustrates a collecting system for collecting, aggregating and accessing detailed data related to the execution of applications. Collectors 1004 send details from inside each process to data aggregation 1001. When data processing is complete it is written to a storage sub-system 1002 which comprises one or more memory devices, e.g. a local disk. The memory devices may include, but are not limited to, RAM, ROM, EEPROM, flash memory, other memory technology, CD-ROM, digital versatile disks, other optical storage, magnetic cassettes, magnetic tape, magnetic disk storage, other magnetic storage devices, and any other media that can be used to store the desired information and that can be accessed by the computing device. The aggregated data is accessed through APIs 1005. APIs 1005 can be used to access detailed information for any given process, e.g. processes 407, 408, or 411 (Figure 4). The data for each process may include socket descriptor data as shown in Figure 13.

The transaction tracking method described herein may use APIs 1005 to access socket data for processes that process the transaction. Tracing of a transaction can start at any point in any given software architecture. Referring to Figure 4, by way of example, the socket connections on web server 401 and or the specific requests received by web server processes executing on web server 401 can be used to select a starting point. The details of the socket connections and or requests for any given process executing on any given server may be obtained by means of APIs 1005. Conversely the socket connections on database server 402 and or the specific requests received by database server processes executing on database server 402 can be used to select a starting point. The same principle applies to connections and requests at servers 503, 504, 505, 506 as shown in Figure 6. The choice of a specific starting point is most often determined in one of two ways; 1) In response to a reported or suspected issue with a software architecture an operator may choose to start at a point that reports high response times. Where response times are included in the socket data , 2) The details of any transaction may also, for example, be used for administration, management or security purposes by tracking the details of any transaction. It may be advantageous that the starting point for mapping a transaction is the at the edge of a network, at web server 401 or 502.

The transaction tracking method described herein preferably includes storing socket data in one or more memory devices as described with reference to Figure 14, and using APIs 1005 to access the socket data, which provides the ability of tracking a transaction in the absence of information on the network structure. In a less preferable embodiment, a portion of the socket data may be stored on the node where the portion of the socket data has been collected. The method may include using a control device which communicates with the nodes in the same order as a transaction is traced. With reference to Figure 4, the control device may first access the node 401 as a base node, retrieve socket data from the memory of the node 401, in a trace-in step 1420 identify the database node 402 as a traced node, and further access socket data at the memory of the node 402.

The method disclosed herein may be employed by using stored information associated with communication connectors, such as sockets as discussed above or pipes including Named Pipes, which provide communication between nodes and processes in a way similar to sockets. In a system comprising a plurality of nodes, each node controlled by one or more processors a method of tracking a transaction communicated through two of the plurality of nodes connected using communication connectors, wherein data associated with the communication connectors is stored in memory, the method comprising the ordered steps of: (a) initiating tracking, comprising: identifying a base node within the plurality of nodes, wherein the base node is associated with the transaction, and identifying one or more trace-out communication connectors on the base node, associated with the transaction; (b) identifying one or more transaction nodes within the plurality of nodes, each connected to the base node identified in step (a) or to another of the transaction nodes identified in step (b), comprising: (i) for each of the trace-out communication connectors, by using the data stored in memory, identifying a traced node and a trace-in communication connector on the traced node, wherein the trace-in communication connector on the traced node and the trace-out communication connector on the base node form a communication connectors pair; (ii) for each of the traced nodes and the trace-in communication connectors identified in step (i), by using the data stored in memory, identifying one or more trace-out communication connectors on the traced node; and, (iii) for each of the traced nodes identified in step (i) and for each of the trace-out communication connectors identified in step (ii), repeating steps (i)-(iii) wherein the base node in step (i) is the traced node.

In a network comprising a plurality of nodes, each node controlled by one or more processors, a method of tracking a transaction communicated through at least two of the plurality of nodes connected using communication connectors, wherein data associated with the communication connectors is stored in one or more memory devices, wherein the transaction is processed by processes executed by the one or more processors on transaction nodes, the method comprising the steps of: (1) initiating tracking, comprising: identifying a tracking start node within the plurality of nodes, wherein the tracking start node is associated with the transaction, and identifying a trace-out communication connector on the tracking start node, wherein the trace-out communication connector is associated with the transaction; (2) identifying one or more of the transaction nodes within the plurality of nodes, each connected to the tracking start node identified in step (1) or to another of the transaction nodes identified in step (2), comprising: for each i from 1 to N, wherein N is equal or greater than 1: (a) by using a portion of the data stored in the one or more memory devices and associated with the trace-out communication connector on an i^{th} base node, wherein the i^{th} base node is the tracking start node if i=1 or the (i-1)^{th} traced node if i>1, identifying an i^{th} traced node and a trace-in communication connector on the i^{th} traced node, wherein the trace-in communication connector on the i^{th} traced node and the trace-out communication connector on the i^{th} base node form a communication connector pair; (b) by using a portion of the data stored in the one or more memory devices and associated with the trace-in communication connector on the i^{th} traced node, identifying a trace-out communication connector on the i^{th} traced node.

## Claims

1. In a network comprising a plurality of nodes, each node controlled by one or more processors,
a method of tracking a transaction communicated through at least two of the plurality of nodes connected using sockets, wherein socket data associated with the sockets is stored in one or more memory devices, wherein the transaction is processed by processes executed by the one or more processors on transaction nodes,
the method comprising the steps of:
(1) initiating tracking, comprising:
identifying a tracking start node (1300) within the plurality of nodes, wherein the tracking start node (1300) is associated with the transaction, and
identifying a trace-out socket (1310) on the tracking start node (1300), wherein the trace-out socket (1310) is associated with the transaction;
(2) identifying one or more of the transaction nodes within the plurality of nodes, each connected to the tracking start node (1300) identified in step (1) or to another of the transaction nodes (1301) identified in step (2), comprising:
for each i from 1 to *N*, wherein *N* is equal to or greater than 1:
(a) by using a portion of the socket data stored in the one or more memory devices and associated with the trace-out socket (1310, 1312) on an *i*^{th} base node (1300, 1301), wherein the *i*^{th} base node (1300, 1301) is the tracking start node (1300) if *i*=1 or the (*i*-1)^{th} traced node (1301) if *i*>1, identifying an *i*^{th} traced node (1301, 1302) and a trace-in socket (1311, 1313) on the *i*^{th} traced node (1301, 1302), wherein the trace-in socket (1311, 1313) on the *i*^{th} traced node (1301, 1302) and the trace-out socket (1310, 1312) on the *i*^{th} base node (1300, 1301) form a socket pair (1311 and 1310, 1313 and 1312);
wherein, if the trace-out socket (1310, 1312) on the *i*^{th} base node (1300, 1301) is an IP socket, an IP address from the portion of the socket data associated with the trace-out socket (1310, 1312) is used to identify the *i*^{th} traced node (1301, 1302) whereby identifying one of the transaction nodes;
**characterized in that** step (2) comprises:
(b) by using a portion of the socket data stored in the one or more memory devices and associated with the trace-in socket (1311) on the *i*^{th} traced node (1301), identifying a trace-out socket (1312) on the *i*^{th} traced node (1301), comprising identifying a process on the *i*^{th} traced node (1301) and two socket operations performed by the process, wherein one of the two socket operations relates to the trace-in socket (1311) on the *i*^{th} traced node (1301), and another of the two socket operations relates to the trace-out socket (1312) on the *i*^{th} traced node (1301).

2. The method defined in claim 1, wherein the two socket operations on the i^{th} traced node (1301) within a predefined node time interval.

3. The method defined in claim 1, wherein for at least one value of i, the *i*^{th} traced node (1301) is the *i*^{th} base node.

4. The method defined in claim [[2]] 1, further comprising collecting the socket data associated with sockets on the plurality of nodes.

5. The method defined in claim [[5]] 4, wherein using the socket data comprises accessing the socket data stored in the one or more memory devices, without using information on a structure of the network.

6. The method defined in claim [[2]] 1, wherein the predefined node time interval used for identifying the two socket operations on the *i*^{th} traced node (1301) is defined using the portion of the socket data associated with the *i*^{th} traced node.

7. The method defined in claim [[2]] 1, wherein at least one of the trace-in and trace-out sockets (1310, 1311, 1312, 1313) is a UDP socket.

8. The method defined in claim [[2]] 1, wherein the transaction is traced in a reverse direction relative to a transaction timeline from the point where tracing has been initiated.

9. The method defined in claim [[9]] 8, further comprising tracing the transaction in a forward direction along the transaction timeline from the point where tracing has been initiated.

10. The method defined in claim [[2]] 1, wherein the 1^{st} base node (1300) is at an edge of a network.

11. The method defined in claim [[2]] 1, wherein the initiating tracking step comprises using log messages.

12. The method defined in claim [[3]] 1, comprising reporting the process identified on the *i*^{th} traced node (1301) as associated with the transaction.

13. A computational system comprising:
one or more memory devices storing socket data associated with sockets connecting a plurality of nodes, and
one or more hardware processors configured by program instructions stored in the one or more memory devices to track a transaction communicated through the plurality of nodes, comprising the steps of:
(1) initiating tracking, comprising:
identifying a tracking start node within the plurality of nodes, wherein the tracking start node is associated with the transaction, and
identifying a trace-out socket on the tracking start node, wherein the trace-out socket is associated with the transaction;
(2) identifying one or more of the transaction nodes within the plurality of nodes, each connected to the tracking start node identified in step (1) or to another of the transaction nodes identified in step (2), comprising:
for each i from 1 to *N*, wherein *N* is equal or greater than 1:
(a) by using a portion of the socket data stored in the one or more memory devices and associated with the trace-out socket on an *i*^{th} base node, wherein the *i*^{th} base node is the tracking start node if *i*=1 or the (*i*-1)^{th} traced node if *i*>1, identifying an *i*^{th} traced node and a trace-in socket on the *i*^{th} traced node, wherein the trace-in socket on the *i*^{th} traced node and the trace-out socket on the *i*^{th} base node form a socket pair;
wherein, if the trace-out socket on the *i*^{th} base node is an IP socket, an IP address from the portion of the socket data associated with the trace-out socket is used to identify the *i*^{th} traced node whereby identifying one of the transaction nodes;
**characterized in that** step (2) comprises:
(b) by using a portion of the socket data stored in the one or more memory devices and associated with the trace-in socket on the *i*^{th} traced node, identifying a trace-out socket on the *i*^{th} traced node, comprising identifying a process on the *i*^{th} traced node and two socket operations performed by the process, wherein one of the two socket operations relates to the trace-in socket on the *i*^{th} traced node, and another of the two socket operations relates to the trace-out socket on the *i*^{th} traced node.

14. The computational system defined in claim 13, further comprising a plurality of collectors collecting the socket data associated with sockets on the plurality of nodes.

15. The computational system defined in claim 13, wherein the initiating tracking step comprises using log messages.

## Patentansprüche

1. Verfahren zum Nachverfolgen einer Transaktion, die über mindestens zwei der Vielzahl von Knoten übertragen wird, in einem Netzwerk, das eine Vielzahl von Knoten umfasst, wobei jeder Knoten durch einen oder mehrere Prozessoren gesteuert wird, die durch Verwenden von Sockets verbunden werden, wobei Socket-Daten, die den Sockets zugeordnet werden, in einer oder mehreren Speichervorrichtungen gespeichert werden, wobei die Transaktion durch Prozesse verarbeitet wird, die durch den einen oder die mehreren Prozessoren auf Transaktionsknoten ausgeführt werden, wobei das Verfahren die Schritte umfasst:
(1) Auslösen des Nachverfolgens, umfassend:
ein Ermitteln eines Nachverfolgungsstartknotens (1300) innerhalb der Vielzahl von Knoten, wobei der Nachverfolgungsstartknoten (1300) der Transaktion zugeordnet wird, und ein Ermitteln eines Verfolgungsausgangs-Sockets (1310) auf dem Nachverfolgungsstartknoten (1300), wobei das Verfolgungsausgangs-Socket (1310) der Transaktion zugeordnet wird;
(2) Ermitteln eines oder mehrerer der Transaktionsknoten innerhalb der Vielzahl von Knoten, wobei jeder mit dem in Schritt (1) identifizierten Nachverfolgungsstartknoten (1300) oder mit einem anderen der in Schritt (2) identifizierten Transaktionsknoten (1301) verbunden wird, umfassend:
für jedes i aus 1 bis N, wobei N gleich oder größer als 1 ist:
(a) Ermitteln eines *i*-ten verfolgten Knotens (1301, 1302) und eines Verfolgungseingangs-Sockets (1311, 1313) auf dem *i*-ten verfolgten Knoten (1301, 1302) durch Verwenden einer Menge der in der einen oder den mehreren Speichervorrichtungen gespeicherten und dem Verfolgungsausgangs-Socket (1310, 1312) auf einem *i*-ten Basisknoten (1300, 1301) zugeordneten Socket-Daten, wobei bei *i* = 1 der *i*-te Basisknoten (1300, 1301) der Nachverfolgungsstartknoten (1300) oder bei *i* > 1 der (*i* - 1)-te verfolgte Knoten (1301) ist, wobei das Verfolgungseingangs-Socket (1311, 1313) auf dem *i*-ten verfolgten Knoten (1301, 1302) und das Verfolgungsausgangs-Socket (1310, 1312) auf dem *i*-ten Basisknoten (1300, 1301) ein Socket-Paar (1311 und 1310, 1313 und 1312) bilden;
wobei, wenn das Verfolgungsausgangs-Socket (1310, 1312) auf dem *i*-ten Basisknoten (1300, 1301) ein IP-Socket ist, eine IP-Adresse aus der Menge der dem Verfolgungsausgangs-Socket (1310, 1312) zugeordneten Socket-Daten verwendet wird, um den *i*-ten verfolgten Knoten (1301, 1302) zu ermitteln, wobei einer der Transaktionsknoten ermittelt wird;
**dadurch gekennzeichnet, dass** Schritt (2) umfasst:
(b) Ermitteln eines Verfolgungsausgangs-Sockets (1312) auf dem *i*-ten verfolgten Knoten (1301) durch Verwenden einer Menge der in der einen oder den mehreren Speichervorrichtungen gespeicherten und dem Verfolgungseingangs-Socket (1311) auf dem *i*-ten verfolgten Knoten (1301) zugeordneten Socket-Daten, wobei ein Ermitteln eines Prozesses auf dem *i*-ten verfolgten Knoten (1301) und zwei durch den Prozess durchgeführte Socket-Abläufe umfasst werden, wobei sich einer der beiden Socket-Abläufe auf das Verfolgungseingangs-Socket (1311) auf dem *i*-ten verfolgten Knoten (1301) bezieht, und ein anderer der beiden Socket-Abläufe sich auf das Verfolgungsausgangs-Socket (1312) auf dem *i*-ten verfolgten Knoten (1301) bezieht.

2. Verfahren nach Anspruch 1, wobei die beiden Socket-Abläufe auf dem *i*-ten verfolgten Knoten (1301) innerhalb eines vordefinieren Knotenzeitintervals liegen.

3. Verfahren nach Anspruch 1, wobei für mindestens einen Wert von *i* der *i*-te verfolgte Knoten (1301) der *i*-te Basisknoten ist.

4. Verfahren nach Anspruch 1, das des Weiteren ein Sammeln der den Sockets zugeordneten Socket-Daten auf der Vielzahl von Knoten umfasst.

5. Verfahren nach Anspruch 4, wobei ein Verwenden der Socket-Daten ein Zugreifen auf die in der einen oder den mehreren Speichervorrichtungen gespeicherten Socket-Daten ohne Verwenden von Informationen über eine Struktur des Netzwerks umfasst.

6. Verfahren nach Anspruch 1, wobei das zum Ermitteln der beiden Socket-Abläufe auf dem *i*-ten verfolgten Knoten (1301) verwendete vordefinierte Knotenzeitintervall durch Verwenden der Menge der dem *i*-ten verfolgten Knoten zugeordneten Socket-Daten definiert wird.

7. Verfahren nach Anspruch 1, wobei mindestens eines der Verfolgungseingangs- und Verfolgungsausgangs-Sockets (1310, 1311, 1312, 1313) ein UDP-Socket ist.

8. Verfahren nach Anspruch 1, wobei die Transaktion in einer Umkehrrichtung bezogen auf eine Transaktionszeitachse ab dem Punkt verfolgt wird, bei dem eine Verfolgung ausgelöst wurde.

9. Verfahren nach Anspruch 8, das des Weiteren eine Verfolgung der Transaktion in einer Vorwärtsrichtung entlang der Transaktionszeitachse ab dem Punkt umfasst, bei dem eine Verfolgung ausgelöst wurde.

10. Verfahren nach Anspruch 1, wobei der 1. Basisknoten (1300) sich an einer Kante eines Netzwerks befindet.

11. Verfahren nach Anspruch 1, wobei der auslösende Nachverfolgungsschritt ein Verwenden von Protokollnachrichten umfasst.

12. Verfahren nach Anspruch 1, das eine Berichterstattung des auf dem *i*-ten verfolgten Knoten (1301) identifizierten Prozesses als der Transaktion zugeordnet umfasst.

13. Computersystem, umfassend:
eine oder mehrere Speichervorrichtungen, die Socket-Daten speichern, die Sockets zugeordnet werden, die eine Vielzahl von Knoten verbinden, und einen oder mehrere Hardwareprozessoren,
die durch Programmanweisungen konfiguriert werden, die in der einen oder den mehreren Speichervorrichtungen gespeichert werden, um eine über die Vielzahl von Knoten übertragene Transaktion nachzuverfolgen, umfassend die Schritte:
(1) Auslösen des Nachverfolgens, umfassend:
ein Ermitteln eines Nachverfolgungsstartknotens innerhalb der Vielzahl von Knoten, wobei der Nachverfolgungsstartknoten der Transaktion zugeordnet wird, und ein Ermitteln eines Verfolgungsausgangs-Sockets auf dem Nachverfolgungsstartknoten, wobei das Verfolgungsausgangs-Socket der Transaktion zugeordnet wird;
(2) Ermitteln eines oder mehrerer der Transaktionsknoten innerhalb der Vielzahl von Knoten, wobei jeder mit dem in Schritt (1) identifizierten Nachverfolgungsstartknoten oder mit einem in Schritt (2) identifizierten anderen der Transaktionsknoten verbunden wird, umfassend:
für jedes i aus 1 bis N, wobei N gleich oder größer als 1 ist:
(a) Ermitteln eines i-ten verfolgten Knotens und eines Verfolgungseingangs-Sockets auf dem i-ten verfolgten Knoten durch Verwenden einer Menge der in der einen oder den mehreren Speichervorrichtungen gespeicherten und dem Verfolgungsausgangs-Socket auf einem i-ten Basisknoten zugeordneten Socket-Daten, wobei der i-te Basisknoten bei i = 1 der Verfolgungsstartknoten oder bei i > 1 der (i - l)-te verfolgte Knoten ist, wobei das Verfolgungseingangs-Socket auf dem i-ten verfolgten Knoten und das Verfolgungsausgangs-Socket auf dem i-ten Basisknoten ein Socket-Paar bilden;
wobei, wenn das Verfolgungsausgangs-Socket auf dem i-ten Basisknoten ein IP-Socket ist, eine IP-Adresse aus der Menge der dem Verfolgungsausgangs-Socket zugeordneten Socket-Daten verwendet wird, um den i-ten verfolgten Knoten zu ermitteln, wobei einer der Transaktionsknoten ermittelt wird;
**dadurch gekennzeichnet, dass** Schritt (2) umfasst:
(b) Ermitteln eines Verfolgungsausgangs-Sockets auf dem i-ten verfolgten Knoten durch Verwenden einer Menge der in der einen oder den mehreren Speichervorrichtungen gespeicherten und dem Verfolgungseingangs-Socket auf dem i-ten verfolgten Knoten zugeordneten Socket-Daten, wobei ein Ermitteln eines Prozesses auf dem i-ten verfolgten Knoten und zwei durch den Prozess durchgeführte Socket-Abläufe umfasst werden, wobei sich einer der beiden Socket-Abläufe auf das Verfolgungseingangs-Socket auf dem i-ten verfolgten Knoten bezieht, und ein anderer der beiden Socket-Abläufe sich auf das Verfolgungsausgangs-Socket auf dem i-ten verfolgten Knoten bezieht.

14. Computersystem nach Anspruch 13, das des Weiteren eine Vielzahl von Kollektoren umfasst, die die den Sockets auf der Vielzahl von Knoten zugeordneten Socket-Daten sammeln.

15. Computersystem nach Anspruch 13, wobei der auslösende Nachverfolgungsschritt ein Verwenden von Protokollnachrichten umfasst.

## Revendications

1. Dans un réseau comprenant une pluralité de noeuds, chaque noeud étant contrôlé par un ou plusieurs processeurs, méthode de suivi d'une transaction communiquée à travers au moins deux de la pluralité de noeuds connectés à l'aide de prises, les données de prise correspondant aux prises étant placées dans une ou plusieurs dispositifs à mémoire, la transaction étant traitée par des procédés exécutés par le ou plusieurs processeurs sur des noeuds de transaction, la méthode comprenant les étapes suivantes :
(1) lancement du suivi, comprenant :
l'identification d'un noeud de départ du suivi (1300) au sein de la pluralité de noeuds, le noeud de départ du suivi (1300) étant associé avec la transaction, et identification d'une prise de retraçage en aval (1310) sur le noeud de départ du suivi (1300), la prise de retraçage (1310) correspondant à la transaction ;
(2) l'identification d'un ou plusieurs noeuds de transaction au sein de la pluralité de noeuds, chacun étant connecté au noeud de départ du suivi (1300) identifié à l'étape (1) ou à un autre des noeuds de transaction (1301) identifiés à l'étape (2), comprenant :
pour chaque i de 1 à *N*, *N* étant égal ou supérieur à 1 :
(a) en utilisant une partie des données de prise placées dans l'un ou plusieurs dispositifs à mémoire et correspondant à la prise de retraçage en aval (1310, 1312) sur un *i*^{ème} noeud de base (1300, 1301), l'*i*^{ème} noeud de base (1300, 1301) étant le noeud de départ du suivi (1300) si *i* = 1 ou le (*i* - 1)^{ème} noeud suivi (1301) si *i*>1, en identifiant un *i*^{ème} noeud suivi (1301, 1302) et une prise de retraçage (1311, 1313) sur l' *i*^{ème} noeud suivi (1301, 1302), la prise de retraçage (1311, 1313) sur l'*i*^{ème} noeud suivi (1301, 1302) et la prise de retraçage en aval (1310, 1312) sur l'*i*^{ème} noeud de base (1300, 1301) constituant une paire de prises (1311 et 1310, 1313 et 1312);
où, si la prise de retraçage en aval (1310, 1312) sur l'*i*^{ème} noeud de base (1300, 1301) est une prise IP, on utilise une adresse IP de la partie des données de prise associées à la prise de retraçage en aval (1310, 1312) pour identifier l'*i*^{ème} e noeud suivi (1301, 1302), en identifiant ainsi un des noeuds de transaction ;
**caractérisée en ce que** l'étape (2) comprend :
(b) en utilisant une partie des données de prise placées dans un ou plusieurs dispositifs à mémoire et correspondant à la prise de retraçage (1311) sur l'*i*^{ème} noeud de suivi (1301), l'identification d'une prise de retraçage en aval (1312) sur l'*i*^{ème} noeud de suivi (1301) comprenant l'identification d'un procédé sur l'*i*^{ème} noeud de suivi (1301) et deux opérations de prise effectués par le procédé, une des deux opérations de prise se rapportant à la prise de retraçage (1311) sur l'*i*^{ème} noeud de suivi (1301), l'autre des deux opérations de prise se rapportant à la prise de retraçage en aval (1312) sur l'*i*^{ème} noeud de suivi (1301).

2. Méthode définie selon la revendication 1, les deux opérations de prise (1301) dans un intervalle de temps de noeud prédéfini.

3. Méthode définie selon la revendication 1, pour au moins une valeur de *i*, l'*i*^{ème} noeud de suivi (1301) étant l'*i*^{ème} noeud de base.

4. Méthode définie selon la revendication 1, comprenant en outre la collecte de données de prise correspondant à des prises sur la pluralité de noeuds.

5. Méthode définie selon la revendication 4, l'utilisation des données de prise comprenant l'accès aux données de prise placées dans un ou plusieurs des dispositifs à mémoire, sans utiliser d'informations sur une structure du réseau.

6. Méthode définie selon la revendication 1, l'intervalle de temps de noeud prédéfini utilisé pour l'identification des deux opérations de prise sur l'*i*^{ème} noeud de suivi (1301) étant défini en utilisant la partie des données de prise correspondant à l'*i*^{ème} noeud de suivi.

7. Méthode définie selon la revendication 1, au moins une des prises de retraçage et de retraçage en aval (1310, 1311, 1312, 1313) étant une prise UDP.

8. Méthode définie selon la revendication 1, la transaction étant suivie dans une direction inverse relativement à un délai de transaction à partir du point où le suivi a été lancé.

9. Méthode définie selon la revendication 8, comprenant en outre le suivi de la transaction en avant le long du délai de transaction à partir du point où le suivi a été lancé.

10. Méthode définie selon la revendication 1, le noeud de départ du suivi (1300) se trouvant à un bord d'un réseau.

11. Méthode définie selon la revendication 1, l'étape de lancement du suivi comprenant l'emploi de messages de session.

12. Méthode définie selon la revendication 1, comprenant la signalisation du procédé identifié sur l'*i*^{ème} noeud de suivi (1301) comme correspondant à la transaction.

13. Système informatique comprenant :
un ou plusieurs dispositifs à mémoire dans lesquels sont placées des données correspondant à des prises connectant une pluralité de noeuds, et un ou plusieurs processeurs matériels configurés pour la programmation d'instructions placées dans un ou plusieurs dispositifs à mémoire pour le suivi d'une transaction communiquée par le biais de la pluralité de noeuds, comprenant les étapes suivantes :
(1) lancement du suivi, comprenant :
l'identification d'un noeud de départ du suivi au sein de la pluralité de noeuds, le noeud de départ du suivi étant associé avec la transaction, et
l'identification d'une prise de retraçage en aval sur le noeud de départ du suivi, la prise de retraçage correspondant à la transaction ;
(2) l'identification d'un ou plusieurs des noeuds de transaction au sein de la pluralité de noeuds, chacun étant connecté au noeud de départ du suivi identifié à l'étape (1) ou à un autre des noeuds de transaction identifiés à l'étape (2), comprenant :
pour chaque i de 1 à N, N étant égal ou supérieur à 1 :
(a) en utilisant une partie des données de prise placées dans l'un ou plusieurs dispositifs à mémoire et correspondant à la prise de retraçage en aval sur un *i*^{ème} noeud de base, l'*i*^{ème} noeud de base étant le noeud de départ du suivi si *i* = 1 ou le (*i* - 1)^{ème} noeud suivi si *i*>1, en identifiant un *i*^{ème} noeud suivi et une prise de retraçage sur l'*i*^{ème} noeud suivi, la prise de retraçage sur l'*i*^{ème} noeud suivi et la prise de retraçage en aval sur l'*i*^{ème} noeud de base constituant une paire de prises ;
où, si la prise de retraçage en aval sur l'*i*^{ème} e noeud de base est une prise IP, on utilise une adresse IP de la partie des données de prise associées à la prise de retraçage en aval pour identifier l'*i*^{ème} noeud suivi, en identifiant ainsi un des noeuds de transaction ;
**caractérisé en ce que** l'étape (2) comprend :
(b) en utilisant une partie des données de prise placées dans un ou plusieurs dispositifs à mémoire et correspondant à la prise de retraçage l'*i*^{ème} noeud de suivi, l'identification d'une prise de retraçage en aval sur l'*i*^{ème} noeud de suivi, comprenant l'identification d'un procédé sur l'*i*^{ème} noeud de suivi et deux opérations de prise effectués par le procédé, une des deux opérations de prise se rapportant à la prise de retraçage sur l'*i*^{ème} noeud de suivi, et une autre des deux opérations de prise se rapportant à la prise de retraçage en aval sur l'*i*^{ème} e noeud de suivi.

14. Système informatique défini selon la revendication 13, comprenant en outre une pluralité de collecteurs collectant les données des prises correspondant à des prises sur la pluralité de noeuds.

15. Système informatique défini selon la revendication 13, l'étape de lancement du suivi comprenant l'emploi de messages de session.
